# EUROPEAN PATENT APPLICATION

(11) **EP 2 216 975 A1**
(43) Date of publication of application: **11.08.2010**
(21) Application number: 09290242.8
(22) Date of filing: 31.03.2009
(51) Int. Cl.: H04M 3/56, H04M 1/60, H04R 5/033

(54) **Telecommunication device**

(30) Priority: 04.02.2009 EP 09290080
(71) Applicant: Alcatel Lucent, 75008 Paris (FR)
(72) Inventor: Wajda, Wieslawa, 75210 Keltern (DE)
(74) Representative: Zinsinger, Norbert

(57) **Abstract**

The invention concerns a telecommunication device (1) for an audio telecommunication between the telecommunication device (1) and one or more other telecommunication devices, and a method of providing an audio telecommunication between a person wearing the telecommunication device (1) and the one or more other telecommunication devices. The audio telecommunication enables a simultaneous, bi-directional exchange of audio data between the telecommunication devices (1) participating in the audio telecommunication. The telecommunication device (1) comprises a right and a left ear inset (4) for a right and a left ear (2), respectively, of the person using the telecommunication device (1), the ear insets (4) adapted to be at least partially inserted into the respective ear (2) and comprising a blocking device (42), a loudspeaker (44), and a microphone (46), a processing unit (6) adapted to receive electrical microphone signals from the microphone (46), and electrical input communication signals from the one or more other telecommunication devices, adjust the electrical microphone signals and the electrical input communication signals, generate electrical loudspeaker signals and electrical output communication signals by means of a respective combination of the adjusted signals, and send the electrical loudspeaker signals to the loudspeakers (44) and the electrical output communication signals to the one or more other telecommunication devices.

## Description

The present invention relates to a telecommunication device comprising a right and a left ear inset for a right and a left ear, respectively, of a person using the telecommunication device, and a corresponding method for operating the telecommunication device.

Conventional telecommunication devices have been focusing on "face to face" communication allowing only two (e.g. in a traditional phone call) or, in some cases, only a few speakers (e.g. in a phone conference) to contact each other. Especially in a phone conference where a group of participants sitting in a conference room are speaking at the same time - they are in a phone conference with a remote group of participants - the perspicuity of audio data is not always given.

Today's society develops towards pervasive communication. An example of that trend are today's chat rooms, blogs and similar facilities. Future telecommunication devices have to support a multi-speaker communication similar to that in real life so that people are able to continuously stay in contact with co-working team members, family, friends, interest groups and other.

The object of the present invention is an improved telecommunication device.

The object of the present invention is achieved by a telecommunication device for an audio telecommunication between the telecommunication device and one or more other telecommunication devices, whereby the audio telecommunication enables a simultaneous, bi-directional exchange of audio data between the telecommunication devices participating in the audio telecommunication, the telecommunication device comprising a right and a left ear inset for a right and a left ear, respectively, of a person using the telecommunication device, each ear inset adapted to be at least partially inserted into the ear canal of the respective ear and comprising a blocking device adapted to restrict a propagation of airborne sounds reaching the person's ear from external sound sources to the ear drum of the respective ear, a loudspeaker in acoustic communication with the ear drum of the respective ear whereby the loudspeaker is adapted to convert received electrical loudspeaker signals into sound, a microphone in acoustic communication with said airborne sounds whereby the microphone is adapted to convert said airborne sounds, as said audio data, into electrical microphone signals, a processing unit adapted to receive the electrical microphone signals from the microphone, and electrical input communication signals from the one or more other telecommunication devices, adjust the electrical microphone signals and the electrical input communication signals, generate the electrical loudspeaker signals, separately as right ear signals and a left ear signals, and electrical output communication signals by means of a respective combination of the adjusted signals, and send the electrical loudspeaker signals, separately as right ear signals and left ear signals, to the loudspeakers of the right and the left ear inset and the electrical output communication signals to the one or more other telecommunication devices, connection means adapted to electrically couple the loudspeakers of both ear insets, the microphone and the processing unit, and communication means adapted to provide the processing unit with a connection to the one or more other telecommunication devices. The object of the present invention is further achieved by a method of providing an audio telecommunication between a person and one or more other telecommunication devices, whereby the audio telecommunication enables a simultaneous, bi-directional exchange of audio data between the person and the other telecommunication devices participating in the audio telecommunication, the method comprising the steps of receiving airborne sound reaching the person's ears from an external sound source by a microphone attached to a right or a left ear inset at least partially inserted into an ear canal of the respective right or left ear, restricting a propagation of said airborne sound to ear drums of the person's ears, converting, by the microphone, said airborne sound into electrical microphone signals and sending said electrical microphone signals to a processing unit, receiving, by the processing unit, said electrical microphone signals, receiving, by the processing unit, electrical input communication signals as audio data from the one or more other telecommunication devices, adjusting, by the processing unit, the electrical microphone signals and the electrical input communication signals, and generating, by means of a respective combination of the adjusted signals, electrical loudspeaker signals, separately as right ear signals and left ear signals, and electrical output communication signals, sending the electrical loudspeaker signals, separately as the right ear signals and the left ear signals, to a right and a left loudspeaker attached to the right and the left ear inset, respectively, whereby sound generated by said loudspeakers is in acoustic communication with the ear drum of the respective ear, converting, by the right and the left loudspeaker, the respective right ear and left ear signals of the electrical loudspeaker signals into sound which is received by the ear drum of the respective ear, and sending the electrical output communication signals to the one or more other telecommunication devices.

The ear canal (also: external auditory canal; medical term: meatus acusticus externus) extends from the opening of the concha (medical term: cavitas conchalis) to the eardrum (also: tympanic membrane). The ear canal of an adult human being has a length of approximately 2.4 cm and a diameter of approximately 6 mm.

The present invention means a great improvement of current telecommunication devices as it makes communication easy and stress-free. The invention allows a new kind of communication where people are able to continuously stay in contact with co-working team members, family, friends, interest groups and other. The invention allows stress-free communication in single or multiple groups of interest. The invention combines hands-free and phone communication.

The telecommunication device allows in conjunction with facilities of the telecommunication system to create a virtual speaking room (also referred to as virtual call room), where surrounding sounds and sounds from remote sources, e.g. electrically transmitted sounds from other telecommunication devices, are mixed into a homogenous virtual audio space (also referred to as virtual conversation space). The telecommunication devices participating in the audio telecommunication represent a speaker group. The audio telecommunication represents a virtual speaking room. The hearing impression of the person using the telecommunication device according to the invention represents a virtual audio space. By means of the present invention, it is also simpler to create virtual offices based on a home office concept.

The present invention provides an appropriate user terminal for multi-speaker communication environments supporting multi-speaker communication similar to that in a real live. A person/user wearing/using the telecommunication device according to the invention receives sounds from the world around him and sounds from far audio sources mixed together by means of a sophisticated mixing process into a virtual homogeneous world (virtual call room). Earphones (tightly fitting ear insets) isolate the user from surrounding sounds. Microphones placed in the earphones (insets) record these surrounding sounds. These recorded sounds are then mixed with electrically transmitted sounds received from telecommunication partners of the user to form the virtual call room and are reproduced to the user's ear by means of loudspeakers.

In case of a conference call or a chat room involving a multitude of participants, the voice of a specific participant is not lost in the talk of the other participants and there is a control over how clearly a specific participant can be heard. Hence, the present invention supports lifelike communication. The present invention improves the way of communicating via telecommunication systems. Users of the present invention are able to stay in touch with each other without the hitherto existing limitations.

Further advantages are achieved by the embodiments of the invention indicated by the dependent claims.

It is possible that the telecommunication device further comprises an orientation detector unit adapted to detect an orientation of at least one of the ear insets, generate an electrical orientation signal indicating the said detected orientation, and send the said electrical orientation signal to the processing unit. It is also possible that the processing unit is further adapted to take into consideration the received electrical orientation signal as a control parameter when adjusting the electrical microphone signals and the electrical input communication signals, and generating, by means of a respective combination of the adjusted signals, electrical loudspeaker signals, separately as right ear signals and left ear signals, and electrical output communication signals.

It is possible that the processing unit is further adapted to take into consideration one or more parameters related to a perspicuity of the electrical loudspeaker signals and/or the electrical output communication signals as control parameters when adjusting the electrical microphone signals and the electrical input communication signals, and generating, by means of a respective combination of the adjusted signals, electrical loudspeaker signals, separately as right ear signals and left ear signals, and electrical output communication signals. Thus, perspicuity is guaranteed even for a great number of speakers.

In the context of the present invention, the term "perspicuity" is meant to express the fact that audio data/signals, e.g. speakers' voices and other acoustic information, are perspicuous, i.e. clearly presented, in a bi-directional communication so that the audio data/signals can be easily understood, i.e. perceived, by listeners. In this sense, the term "perspicuity" comprises the meaning of one or more of the following terms: understandability, perceivability, intelligibility, comprehensibility. The perspicuity may be measured by determining one or more of the following parameters: the number of telecommunication devices associated with the audio telecommunication, the number of simultaneously received audio data within the audio telecommunication, a ratio of silent time to speaking time, a privacy level assigned by a user of a telecommunication device to an issue to be discussed in the audio telecommunication.

It is also possible that the communication means provide the processing unit with a connection to perspicuity control facilities of a telecommunications system, in particular a perspicuity control processor (= PCP) of a telecommunication network. The one or more other telecommunication devices may be indirectly connected to the processing unit, i.e. by interconnection via the PCP. It is possible that the PCP receives audio data associated with the audio telecommunication from the one or more other telecommunication devices and electrical signals associated with the audio telecommunication from the processing unit, particularly processed or unprocessed electrical signals from the microphone and the orientation signal. Then, the PCP may process the received audio data and the received electrical signals with respect to perspicuity and send respective perspicuity-processed signals to the processing unit and the one or more other telecommunication devices.

According to an embodiment of the invention, the PCP is adapted to take into consideration one or more parameters related to a perspicuity. It is possible that the PCP is adapted to take into consideration one or more parameters related to a perspicuity, i.e. to provide perspicuity control for an established audio telecommunication, by means of
a. a decision to separate speakers into speaker groups based on an understandability coefficient measured as for example one or more of the following:
   i. number of interruptions per second,
   ii. spectral perceptibility of single vowels and consonants,
   iii. perceptibility of words or sentences,
b. a decision to consolidate a first and a second speaker group into a bigger group based on one or more of the following values measured in the first and/or the second speaker group:
   i. a ratio of silent time to speaking time,
   ii. a number of aborted conversations,
   iii. a number of questions without answer,
c. separation criteria based on one or more of the following criteria, whereby the two or more users are referred to as speakers:
   i. speakers' location, i.e. positions of the two or more users,
   ii. speakers' time of entry into a conversation,
   iii. speakers' interaction based on a semantic or a temporal correlation,
   iv. speaker context expressed as a metric using a subset of speaker-related attributes,
   v. a meaningful combination of the above,
d. shifting all other but members of the speaker group which the speaker belongs to into a background by means of one or more of the following:
   i. a volume reduction,
   ii. a time shift,
   iii. a frequency shift,
   iv. a spectral treatment,
e. a speaker interruption control achieved by one or more of the following:
   i. a flexible speaking time sharing,
   ii. a volume reduction for all speakers not marked as speaking,
   iii. a fixed time slicing,
   iv. dynamic speaker lists,
   v. other methods,
f. provision of a method allowing speakers to move between speaker groups.

It is possible that the processing unit is adapted to adjust a magnitude of the electrical microphone signals and the electrical input communication signals according to perspicuity-related control parameters and divide, by taking into account the electrical orientation signal, the adjusted signals to a right loudspeaker signal channel and a left loudspeaker signal channel so as to associate with each of the one or more other telecommunication devices and the airborne sound a specific spatial hearing impression for the person using the telecommunication device.

According to an embodiment of the invention, each ear inset comprises a front element adapted to be inserted into the ear canal of the respective ear, and a back element adapted to be positioned in proximity to the pinna (also: auricle; medical term: auricula) and the concha.

According to an embodiment of the invention, the inventive telecommunication device represents a terminal equipment which is equipped with the following devices:
i) a microphone and loudspeaker subsystem including corresponding electronics preserving surrounding sound (= sound from the external sound sources, e.g. speakers near the person (discussion partners, conference participants), speech from the person's own mouth, background noise, etc.) and allowing an overlapping of that sound with a three dimensional sound from remote (= far) communication partners (e.g. via a call room);
ii) a prospect control device recording a direction of a speaker's face and providing that input to the perspicuity control;
iii) a display device and an input capability for far speaker management (call room management), allowing at least creation and deletion of the call room, creation and deletion of a speaker group, call room management and participant management;
iv) an access subsystem allowing wire bound or wireless connection to other telecommunication devices and/or systems.

It is possible that the call room management is executed by a perspicuity control implemented in the telecommunication network and that the telecommunication device only comprises a user interface (= input capability) of the call room management.

It is possible that the audio data originating from the one or more other telecommunication devices are processed by the PCP to generate a virtual call room. Then these virtual call room audio data are sent to the processing unit where they are mixed with the above mentioned surrounding sound originating from the microphone and sent to the loudspeakers. Thus, the processing unit merges the ambient sound/noise detected by the microphone, including voices of the person's direct (= near) communication partners, and the sounds of a speaker room (Call room). It is to be noted that the person may communicate both with direct (= near) communication partners by means of directly exchanged airborne speech acoustic waves, and with indirect (= far/remote) communication partners by means of electrically transmitted audio data via telecommunication devices (e.g. telephones).

It is possible that the management of a call room, performed by perspicuity facilities of the telecommunications network, e.g. the PCP, is responsible for the understandability (= perceivability) of a conversation in case of multiple speakers: a satisfactory understandability may be achieved by a limitation of the maximal number of participants, e.g. by partitioning the participants into groups, or by other mechanisms.

It is possible that the management of the communication is determined by one or more pre-defined perspicuity levels. It is possible that a terminal user predefines, by means of a user interface of the telecommunication device, a specific perspicuity level in one or more speaker groups of the communication, e.g. for privacy reasons. For example, a terminal user determines that voice data received from terminal devices associated with a first speaker group are processed so that the voice data are comprehensible only to the users of the terminal devices associated with the first speaker group. Based on this user's determination, the voice data are processed in a way that users of terminal devices associated with another speaker group are not able to understand these voice data.

According to an embodiment of the invention, the processing unit is adapted to adjust a magnitude of the electrical microphone signals and the electrical input communication signals according to perspicuity-related control parameters. Preferably, the perspicuity control unit comprises electronics for signal amplification, e.g. an amplifier. By taking into account the signal source and the electrical orientation signals, the processing unit divides the adjusted signals to a right loudspeaker signal channel and a left loudspeaker signal channel so as to associate with each of the one or more other telecommunication devices and the airborne sounds a different spatial hearing impression perceived by the person.

According to another embodiment of the invention, the blocking device comprises an abutment member adapted to circumferentially abut on the inner surface of the ear canal. The abutment member divides the ear canal into an inner part of the ear canal and an outer part of the ear canal. The abutment member acoustically isolates the inner part of the ear canal from the outer part of the ear canal. The abutment member may be a collar surrounding said ear inset and adapted to engage a wall of the ear canal. Preferably, the abutment member is made of a soft, pliable material.

It is possible that the insets have a standard form or are formed individually for a particular wearer person. It is advantageous that the ear insets fit well into the ears and that the ear insets, in particular the blocking device, have a good sound absorption capability.

According to an embodiment of the invention, the loudspeaker is located in the ear inset behind the blocking device when viewed along the ear canal in direction to the ear drum.

It is possible that the ear inset comprises a tube/channel providing an acoustic connection between the loudspeaker and the ear drum. For example, the tube is approximately along the longitudinal axis of that part of the ear inset which is located in the ear canal and the tube has an opening into the inner part of the ear canal. The tube guides the sound which is generated by the loudspeaker via air conduction to the inner part of the ear canal, and thus to the ear drum. The use of a tube allows to position the loudspeaker at an arbitrary location of the ear inset at. By using a tube, it is not necessary to position the loudspeaker near the ear drum, i.e. in that part of the ear inset which is located in the ear canal. As the selection of the loudspeaker is not limited by the dimensions of that part of the ear inset which is located in the ear canal, a loudspeaker of a usual size may be used.

In an embodiment, the microphone is located in the ear inset in front of the blocking device when viewed along the ear canal in direction to the ear drum.

According to another embodiment of the invention, the orientation detector unit comprises an attitude sensor positioned in a fixed position with respect to at least one of the ear insets and adapted to generate electrical sensor signals indicative of an orientation of the attitude sensor. The purpose of the orientation detector unit is to measure a movement of the person's head. It is possible that the attitude sensor is embodied as an electronic compass measuring a declination angle combined with an inclination measuring device measuring an inclination angle. It is possible that the orientation detector unit is adapted to determine an orientation of one of the ear insets with respect to the declination and the inclination of the geomagnetic field.

Further, it is possible that the telecommunication device further comprises a communication management unit adapted to control the audio telecommunication. According to another embodiment of the invention, the communication management unit comprises an input device for input of communication-related control commands by the person and an output device for output of communication-related information.

According to another embodiment of the invention, the processing unit is further adapted to determine, when receiving the electrical microphone signals and/or the electrical input communication signals, a relationship of the first telecommunication device and/or of the one or more other telecommunication devices with respect to the participating telecommunication devices. The processing unit processes the received audio data and adopts it, for example to spectral characteristic of the ear of the owner of a particular device. Then, the processing unit combines the processed audio data in order to generate the electrical loudspeaker signals and the electrical output communication signals dependent on the determined relationship and on parameter values of one or more parameters related to perspicuity associated with one or more of the participating telecommunication devices.

According to an embodiment of the invention, the processing unit is further adapted to adjust intensity levels of the electrical microphone signals and/or the electrical input communication signals to different intensity levels. The processing unit mixes the adjusted signals whereby the different intensity levels are determined by taking into consideration the determined relationship and the parameter values. Then, the processing unit sends the mixed signals as the said electrical loudspeaker signals, and sends processed or unprocessed electrical signals of the microphone and the orientation signal as the said electrical output communication signals.

It is also possible that the processing unit further comprises a recording unit adapted to record the electrical microphone signals and/or the electrical input communication signals audio data. On a request from the person, the recording unit sends a pre-defined part of the recorded audio data to the loudspeaker.

According to an embodiment of inventive device, the microphone subsystem can be implemented as a wearable or as a stationary device. The stationary version consists of one or more microphones that may be placed in any room or in vehicle, e.g. in a car, and that allows a smooth combination of a virtual voice communication space of a call room and a real surrounding communication space of a room where the microphone is placed.

The wearable version of the microphone consists of one or more microphones integrated into either or both of the insets. According to an embodiment, each ear inset comprises a microphone in acoustic communication with said airborne sounds whereby the microphone is adapted to convert said airborne sounds, as said audio data, into electrical microphone signals. This means that there is a microphone associated with the left ear inset (short: left ear microphone) and a microphone associated with the right ear inset (short: right ear microphone). Preferably, the microphones record a stereo sound from the environment surrounding the microphones, this environment including speaking persons, including the person wearing the ear insets, and other sound sources. The sounds recorded by the microphones are amplified and mixed with "outside" sounds from sources located in a call room, i.e. sounds received via the access subsystem.

The left and right ear microphones provide a left microphone signal and a right microphone signal, respectively. The left and right ear microphones record airborne sounds reaching the person's ears from external sound sources, separately as right ear signals and left ear signals, respectively, convert the recorded right ear signals and left ear signals, respectively, into right ear electrical microphone signals and left ear electrical microphone signals, respectively, and send these microphone signals, separately as right ear electrical microphone signals and left ear electrical microphone signals, to the input unit of the perspicuity control unit. The input unit of the perspicuity control unit is adapted to receive the electrical microphone signals from the microphones, separately as right ear electrical microphone signals and left ear electrical microphone signals. The processing unit of the perspicuity control unit is adapted to adjust the electrical microphone signals, separately as right ear signals and left ear signals, and the electrical input communication signals, combine the adjusted signals as the electrical loudspeaker signals, separately as right ear signals and a left ear signals, and as electrical output communication signals.

It is possible that the microphone record stereo sound of the surrounding environment including speaking persons and other sound sources. The recorded sounds are amplified and mixed with "outside" sounds coming from sources located in a call room, i.e. sounds received via the communication means from other telecommunication devices.

According to an embodiment of the invention, each of the insets, one inset for the left ear and the other inset for the right ear, has at least one microphone and one small loudspeaker. It is possible that one of insets additionally bears the orientation detector unit (also referred to as prospect control device). The orientation detector unit preferably is embodied as an electronic compass and measures as well as declination as the inclination of the earth magnetic field to allow exact movement control of the users head. The orientation detector can also be implemented as an acceleration detector.

According to another embodiment of the invention, the processing unit and/or the PCP further determines an orientation of the face of a user associated with the telecommunication device, applies the determined orientation of the face as a parameter value of a perspicuity-related parameter describing a focus of the user's attention. The user wears the telecommunication device, for example a headset, wherein the attitude sensor is implemented.

It is possible that the processing unit and/or the PCP learns from the measured head movements of a user associated with the telecommunication device where face-to-face communication partners of the user are located. This position can also be calculated using a correlator and a signal received from the microphones placed in a left and the right ear inset. For example, when the user talks to a face-to-face communication partner, his head (face) will more frequently point into the direction where the face-to-face communication partner is located than into other directions. When adjusting sound levels of the audio data and mixing the adjusted audio data, the processing unit and/or the perspicuity control unit takes into account the determined locations of the face-to-face communication partners to provide the user with a corresponding spatially resolved hearing impression.

It is further possible that the perspicuity control unit uses the learned or calculated locations of the face-to-face communication partners for an appropriate placement of remote communication partners, i.e. distant communication partners who communicate with the user via a telecommunication device, as "virtual" face-to-face communication partners. The term "virtual" face-to-face communication partner is to express the fact that the user is given a hearing impression as if the distant communication partners were present as face-to-face communication partners among the "real" face-to-face communication partners, i.e. the near face-to-face communication partners who communicate with the user without a telecommunication device.

According to an embodiment of the invention, the mixing process is made in a way that sound sources, especially the loudspeaker sounds, do not overlap one another in the acoustic space. That may be implemented in a way that, if the user speaks with a first speaker really placed directly in front of the user, the voice of a second speaker received from a call room, i.e. via the communication means, is mixed on the loudspeakers of the ear insets so that the user has a hearing impression that the second speaker is either on the left or on the right of the first, real speaker. The processing unit can use signals from the prospect control device, determine from the signals a direction of the user's face, and for example intensify a current audio signal received from a speaker where the user's face is oriented to. Recording a direction whereto the user is moving his head can be used to increase the effectiveness of perspicuity control and to inform a particular participant of a conversation that a current speaker of the audio telecommunication addresses him directly.

According to an embodiment of the invention, two ear insets are equipped with microphones, loudspeakers and electronics for signal amplification. One of the ear insets is additionally equipped with a prospect control device to record head movements of the speaker. Signals from the microphones and from the prospect control device are transmitted by wire or by radio to the PCP where they are mixed with signals received from a call room management over the access subsystem and sent back to the ear insets and reproduced using the loudspeakers. The call room management has the function to manage virtual call rooms in a previously described way. A user interface provides functions of the call room management to the user in a user convenient way using menu driven approach, gestures, virtual keyboard, etc. The access subsystem provides wire-bound or wireless connection to the telecommunication system.

In case of a stationary version of the inventive terminal equipment, the prospect control device can be implemented as a separate assembly. Specific to the invention is that a user receives sounds of a world around him and the sounds from far sources mixed together by means of a sophisticated mixing process into a virtual homogeneous world (call room). Earphones (insets) isolate the user from the surrounding sound. Microphones placed in the earphones (insets) record the surrounding sound. This sound is then mixed with sounds received from the virtual call room and reproduced with a help of loudspeakers.

These as well as further features and advantages of the invention will be better appreciated by reading the following detailed description of presently preferred exemplary embodiments taken in conjunction with accompanying drawings of which:
- Fig. 1: is a sectional view of an ear of a person using the telecommunication device according to an embodiment of the invention;
- Fig. 2: is a signal flow diagram according to an embodiment of the invention;
- Fig. 3: is a block diagram of a telecommunication device according to an embodiment of the invention; and
- Fig. 4: is a diagram showing a telephone conference wherein a telecommunication device according to an embodiment of the invention is used.

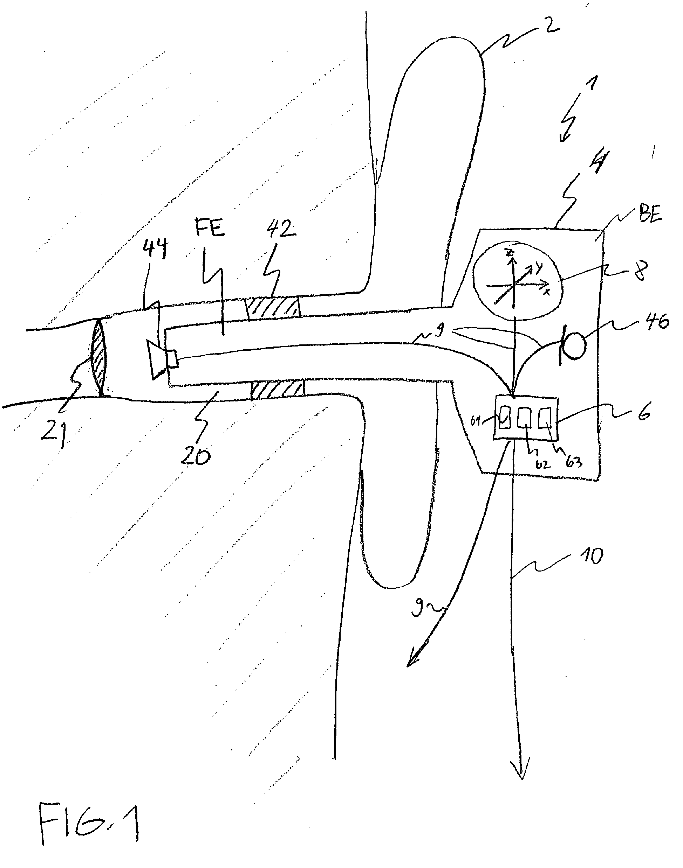

Fig. 1 is a sectional view of an ear 2 of a person 5 using a telecommunication device 1 comprising an ear inset 4. The ear inset 4 comprises a front element FE inserted into the ear canal 20 of the ear 2, and a back element BE positioned in proximity to the pinna of the ear 2. The back element BE may comprise or be formed as a holding device to be hooked onto the pinna of the ear 2. Preferably, the front element FE is formed like an ear plug. The front element FE comprises a loudspeaker 44 positioned in proximity to the eardrum 21 of the ear 2 and in acoustic communication with the eardrum 21. The back element BE comprises a microphone 46 in acoustic communication with airborne sounds reaching the ear 2 from external sound sources, e.g. the mouth of the person 5 or other speaking persons.

The ear inset 4 further comprises a blocking device 42 to restrict a propagation of the said airborne sounds reaching the microphone 46 from the said external sound sources to the ear drum 21. The blocking device 42 is shaped as a collar and is made from a soft, pliable material. The collar 42 is tightly positioned around the front element FE at a position between the loudspeaker 44 and the outer end of the ear canal 20. The collar 42 abuts on the inner wall of the ear canal 20.

The telecommunication device 1 further comprises an orientation detection unit 8, a processing unit 6, connection means 9 which connect the loudspeaker 44, the microphone 46, and the orientation detection unit 8 with the processing unit 6. The processing unit 6 comprises an input interface 61, a processor 62 and an output interface 63. The telecommunication device 1 further comprises communication means 10 which connect the processing unit 6 with one or more other telecommunication devices of users participating in an audio telecommunication with the person 5 or with one or more other telecommunication devices of the person 5. The communication means 10 may be an interface, e.g. a telephone plug to be plugged into a telephone socket or a wireless transmission point. The processing unit 6 can also be partially placed in another functional unit as for example in an external audio communication management unit 22 to lower the weight and size of the inset. In this case the connection between far placed units 61, 62 or 63 of the processing unit 6 can be made by means of the communication means 10.

The ear 2 shown in Fig. 1 is the left ear of the person 5. The person's right ear 2 is equipped with a right ear inset corresponding to the aforementioned left ear inset 4. It is possible that the right ear inset 4 only comprises a loudspeaker, a microphone and a blocking device but does not comprise an orientation detection unit 8 and a processing unit 6 of its own. In this case, the processing unit 6 of the left ear inset 4 also provides processing for the right ear inset, or the processing unit 6 is partially placed in other functional unit as for example in the audio communication management unit 22. The left and the right ear inset 4 are electrically connected by means of the connection means 9. If the processing unit 6 is placed in both insets or it is partially placed in an other functional unit, the left and the right inset need not be electrically connected.

Furthermore, it is sufficient that the orientation of the head, in particular the face, of the person 5 is determined by means of one ear inset 4.

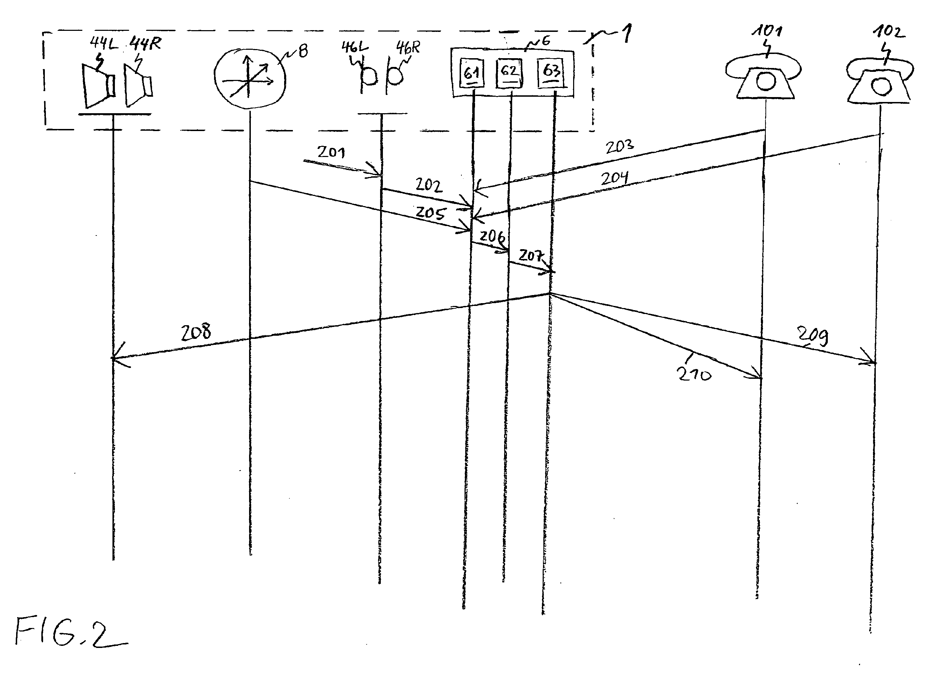

Fig. 2 is a signal flow diagram of signal flows associated with an audio telecommunication between two second telecommunication devices 101, 102 and a first telecommunication device 1 comprising a pair of loudspeakers 44L, 44R and a pair of microphones 46L, 46R associated with a left ear inset 4L and a right ear inset 4R, respectively, an orientation detection unit 8, and a processing unit 6 with an input interface 61, a processor 62 and an output interface 63. The pair of loudspeakers 44L, 44R, the pair of microphones 46L, 46R, and the orientation detection unit 8 are connected with the processing unit 6 by means of connection means 9. The processing unit 6 is connected to an access unit 23 by means of first communication means 10, e.g. wire-line or wireless signal connections, and from there to the second telecommunication devices 101, 102 by means of second communication means 11, e.g. wire-line or wireless signal connections. The first telecommunication device 1 and the two second telecommunication devices 101, 102 are subscribed to a telecommunications network, e.g., a PSTN or a packet-based network (PSTN = Public Switched Telephone Network). The second telecommunication devices 101, 102 may be wire-line and/or wireless terminals, e.g., a telephone set, a mobile phone, a computer operated as a soft phone, etc.

Airborne sounds 201 are recorded by the pair of microphones 46L, 46R and sent 202 via the connection means 9 as right ear electrical microphone signals and left ear electrical microphone signals, to the input interface 61 of the processing unit 6. The input interface 61 further receives via the connection means 9 electrical orientation signals 205 indicating an orientation of at least one of the ear insets 4L, 4R, and via the communication means 10 electrical input communication signals 203, 204 associated with the audio telecommunication, e.g. voice data signals, from the two second telecommunication devices 101, 102.

The input unit 61 of the processing unit 6 sends 206 the received electrical microphone signals 202, the received electrical orientation signals 205, and the received electrical input communication signals 203, 204 to the processor 62 of the processing unit 6. The processor 62 adjusts the electrical microphone signals and the electrical input communication signals and combines the adjusted signals. In a first process, the adjusted signals are combined to create electrical loudspeaker signals, separately as right ear signals and a left ear signals, to be sent to the pair of loudspeakers 44L, 44R. In a second process, the adjusted signals are combined to create electrical output communication signals to be sent to the two second telecommunication devices 101, 102. For the adjustment and combination steps, the processor 62 takes into consideration the electrical orientation signals 205 and one or more parameters related to a perspicuity of the created signals.

The processor 62 sends 207 the created electrical loudspeaker signals and the created electrical output communication signals to the output interface 63 of the processing unit 6. The output interface 63 sends 208 the electrical loudspeaker signals, separately as right ear signals and left ear signals, to the loudspeakers 44L, 44R of the right and the left ear inset 4, respectively. Furthermore, the output interface 63 sends 209, 210 the electrical output communication signals to the two second telecommunication devices 101, 102.

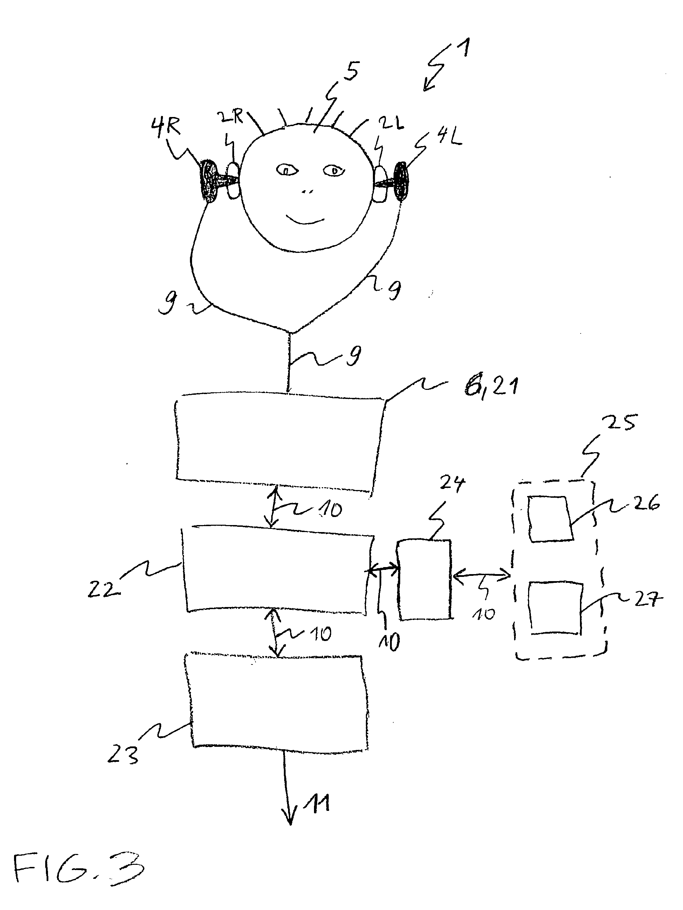

Fig. 3 shows a person 5 using a telecommunication device 1 according to the invention. The user 5 wears a right ear inset 4R inserted into his right ear 2R and a left ear inset 4L inserted into his left ear 2L. The ear insets 4R, 4L are parts of the telecommunication device 1 which further comprises connection and communication means 9, 10 and a processing unit 6. In the present example, the processing unit 6 is at least partially placed in another functional unit, namely a perspicuity control unit 21. That means that the processing unit 6 comprises PCP functionality and may be referred to as a perspicuity control unit 21. The connection means and/or the communication means 9, 10 can be implemented as wireless radio connections or as cable connections.

The telecommunication device 1 further comprises an orientation detection unit 8 which is comprised in either or both the right ear inset 4R and the left ear inset 4L. The connection means 9 connect the ear insets 4L, 4R with the processing unit 6. The communication means 10 connect the processing unit 6 with other functional units 22, 23, 24, 25. The processing unit 6 receives electrical microphone signals from the microphones of the right and the left ear insets 4L, 4R, electrical orientation signals from the orientation detection unit 8 and electrical communication signals from one or more other telecommunication devices which are connected via an access unit 23, e.g. a radio access subsystem or a leased line subsystem. The person 5 and the one or more other telecommunication devices are connected with each other for exchange of audio data in an audio telecommunication.

The processing unit 6 is connected to an audio telecommunication management unit 22 for call room management and other phone/device facilities, such as the Internet. The audio telecommunication management unit 22 is connected to a user unit 24 which provides the person 5 with a control of the audio telecommunication. It is possible that the user unit 24 is user interface of the telecommunication device 1. A user 5 of the telecommunication device 1 interacts with the user unit 24 by means of an input-output device 25 comprising a display 26 and a touch pad 27. The processing unit 6 comprises a signal amplification function, a perspicuity control function, a signal processing function, a mixer and a virtual sound room function.

The processing unit 6 is composed of one or several inter-linked analogue or digital processing units, i.e., a hardware platform, and a software program, in short software, based on the hardware platform. The functionality of the processing unit 6 is provided by the hardware and software platform. The analogue and digital processing units and the software provide a perspicuity control as described in this description. Further, the software product is constituted by a storage medium storing that software or said selected part that programs.

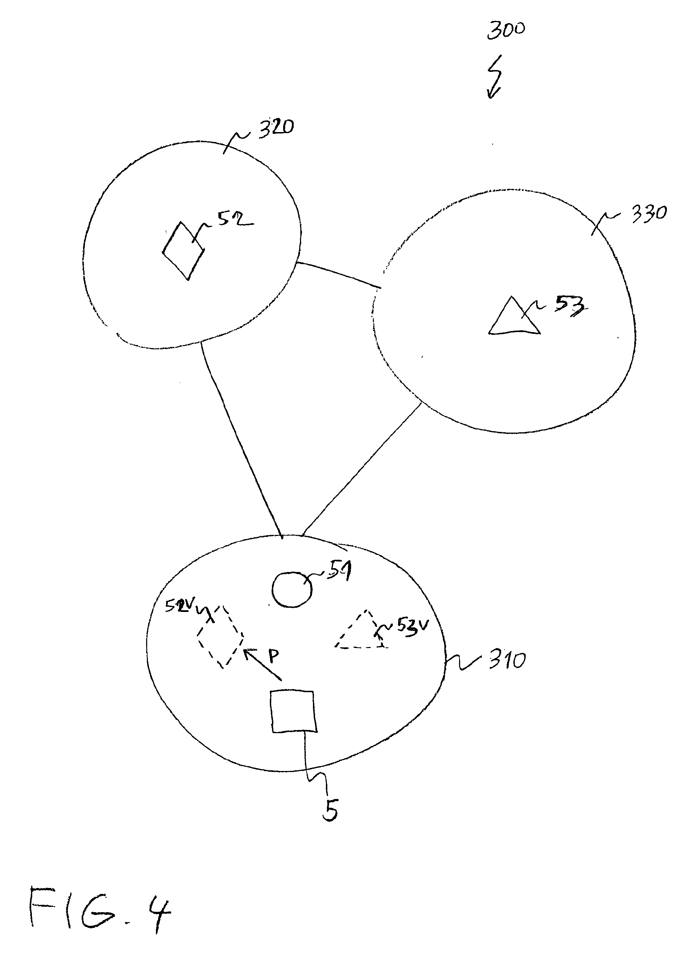

Fig. 4 shows a block diagram of an audio telecommunication 300, e.g. an ongoing telephone conference, involving four participants 5, 51, 52, 53. The four participants 5, 51, 52, 53 of the telephone conference 300 represent a speaker group, the telephone conference 300 represents a call room. The telephone conference 300 involves a person 5 using a telecommunication device according to the present invention, hereinafter called earset, and a first user 51 facing one another at a first location 310, a second user 52 at a second location 320, and a third user 52 at a third location 330. The first user 51, the second user 52, and the third user 53 are each associated with a conventional telecommunication device, e.g. a telephone set.

For example, the first location 310 is a conference room at the headquarters of a company, and the second location 320 and the third location 320 are offices at branches of the company. The telephone conference 300 has been initiated for talking about a current topic associated with the company. Let us assume that the users 5, 51 at the first location 310 talk to each other without the help of a telecommunication device. For talking to the users 52, 53, the person 5 uses the aforementioned earset and the user 51 uses a telephone set. The users 52 and 53 at the remote locations 320, 330 each use a telephone set to communicate with the users 5, 51 at the first location 310.

The audio signals arriving at the earset of the person 5, i.e. the acoustic voice signals from the user 51 arriving at the microphone of the earset and the electric telephone signals from the users 52, 53 arriving at the input unit of the earset, are forwarded as electric signals to the processing unit of the earset. The processing unit adjusts and combines the electric signals at different intensity levels, and sends the different created signals, in a left ear channel and a right ear channel, to the loudspeakers of the earset associated with the person 5 at the conference room 310 so that the person 5 is given the impression as if the remote users 52 and 53 were present as virtual users 52V and 53V within the conference room 310. In parallel to speaking to the remote users 52, 53, the person 5 is able to communicate by talking without technical aids to the user 51.

The voice signals from the user 51 are received by the earset of the person 5 and mixed to the telephone signals from the users 52, 53 so that the perspicuity of the signals is always maintained. For example, when combining the different audio data received by the processing unit 6, it is possible that the processing unit 6 reduces the intensity of the telephone signals from the users 52, 53 and assigns a foreground intensity level to the voice signals of the user 51 arriving at the microphones of the earsets. Likewise, it is possible that the processing unit 6 reduces the intensity of the voice signals arriving at the microphones of the earsets and assigns a foreground intensity level to one of the telephone signals from the users 52, 53.

The person 5 wears an orientation detection device which measures the direction where the face of the person 5 is pointing. For example, one of the insets of the earset is additionally equipped with a prospect control device to record head movements of the speaker. The processing unit 6 learns from the received prospect signals which indicate the movements of the head of the person 5 where the real user 51 is located at the first location 310. From this learned direction, the processing unit 6 determines directions where the virtual users 52V and 53V can be placed acoustically so that the person 5 has a spatially resolved hearing impression depending on the origin of the audio data being heard at the moment. For example, if the user 52 is speaking, the person 5 has the impression that the audio data originating from the user 52 come from the direction P towards a virtual user 52V.

In the following another example of usage of the present invention is given. Two users are sitting in a room in Stuttgart, two users in Munich and two users in Berlin. Each of them is using an embodiment of the inventive device in a wearable version. All six users have entered the same call room and are speaking. The system has created a virtual conversation space, so the speakers are hearing one another as they would be sitting around a big conference table. The real placement of speakers in a real rooms is individually preserved within the call room for each speaker, based on the individual face direction of each speaker.

## Claims

1. A telecommunication device (1) for an audio telecommunication between the telecommunication device (1) and one or more other telecommunication devices (101, 102), whereby the audio telecommunication enables a simultaneous, bi-directional exchange of audio data between the telecommunication devices (1, 101, 102) participating in the audio telecommunication, the telecommunication device (1) comprising
a) a right and a left ear inset (4) for a right and a left ear (2), respectively, of a person (5) using the telecommunication device (1), each ear inset (4) adapted to be at least partially inserted into the ear canal (20) of the respective ear (2) and comprising
a1) a blocking device (42) adapted to restrict a propagation of airborne sounds reaching the person's ear (2) from external sound sources to the ear drum (21) of the respective ear (2),
a2) a loudspeaker (44) in acoustic communication with the ear drum (21) of the respective ear (2) whereby the loudspeaker (44) is adapted to convert received electrical loudspeaker signals into sound,
b) a microphone (46) in acoustic communication with said airborne sounds whereby the microphone (46) is adapted to convert said airborne sounds, as said audio data, into electrical microphone signals,
c) a processing unit (6) adapted to receive the electrical microphone signals from the microphone (46), and electrical input communication signals from the one or more other telecommunication devices (101, 102), adjust the electrical microphone signals and the electrical input communication signals, generate the electrical loudspeaker signals, separately as right ear signals and a left ear signals, and electrical output communication signals by means of a respective combination of the adjusted signals, and send the electrical loudspeaker signals, separately as right ear signals and left ear signals, to the loudspeakers (44) of the right and the left ear inset (4) and the electrical output communication signals to the one or more other telecommunication devices (101, 102),
d) connection means (9) adapted to electrically couple the loudspeakers (44) of both ear insets (4), the microphone (46) and the processing unit (6), and
e) communication means (10) adapted to provide the processing unit (6) with a connection to the one or more other telecommunication devices (101, 102).

2. The telecommunication device (1) of claim 1,
**characterised in**
**that** the telecommunication device (1) further comprises an orientation detector unit (8) adapted to detect an orientation of at least one of the ear insets (4), generate an electrical orientation signal indicating the said detected orientation, and send the said electrical orientation signal to the processing unit (6), and
**that** the processing unit (6) is further adapted to take into consideration the received electrical orientation signal as a control parameter when adjusting the electrical microphone signals and the electrical input communication signals, and generating, by means of a respective combination of the adjusted signals, electrical loudspeaker signals, separately as right ear signals and left ear signals, and electrical output communication signals.

3. The telecommunication device (1) of claim 1,
**characterised in**
**that** the processing unit (6) is further adapted to take into consideration one or more parameters related to a perspicuity of the electrical loudspeaker signals and/or the electrical output communication signals as control parameters when adjusting the electrical microphone signals and the electrical input communication signals, and generating, by means of a respective combination of the adjusted signals, electrical loudspeaker signals, separately as right ear signals and left ear signals, and electrical output communication signals.

4. The telecommunication device (1) of claim 3,
**characterised in**
**that** the processing unit (6) is adapted to adjust a magnitude of the electrical microphone signals and the electrical input communication signals according to perspicuity-related control parameters and divide, by taking into account the electrical orientation signal, the adjusted signals to a right loudspeaker signal channel and a left loudspeaker signal channel so as to associate with each of the one or more other telecommunication devices (101, 102) and the airborne sound a specific spatial hearing impression for the person (5) using the telecommunication device (1).

5. The telecommunication device (1) of claim 1,
**characterised in**
**that** the orientation detector unit (8) comprises an attitude sensor connected to at least one of the ear insets (4) in a fixed position and adapted to generate electrical sensor signals indicative of an orientation of the attitude sensor.

6. The telecommunication device (1) of claim 5,
**characterised in**
**that** the orientation detector unit (8) is adapted to determine an orientation of at least one of the ear insets (4) with respect to the declination and the inclination of the earth magnetic field.

7. The telecommunication device (1) of claim 5,
**characterised in**
**that** the orientation detector unit (8) is adapted to determine an orientation of at least one of the ear insets (4) by means of acceleration detection and relative position calculation.

8. The telecommunication device (1) of claim 1,
**characterised in**
**that** the telecommunication device (1) further comprises a communication management unit (22) adapted to control the audio telecommunication.

9. The telecommunication device (1) of claim 8,
**characterised in**
**that** the communication management unit (22) comprises an input device (25, 27) for input of communication-related control commands by the person (5) and an output device (25, 26) for output of communication-related information.

10. The telecommunication device (1) of claim 1,
**characterised in**
**that** the processing unit (6) is further adapted to determine, when receiving the electrical microphone signals and/or the electrical input communication signals, a relationship of the first telecommunication device (1) and/or of the one or more other telecommunication devices (101, 102) with respect to the participating telecommunication devices (1, 101, 102), process the received audio data and combine the processed audio data as the electrical loudspeaker signals and as the electrical output communication signals dependent on the determined relationship and on parameter values of one or more parameters related to perspicuity associated with one or more of the participating telecommunication devices (1, 101, 102).

11. The telecommunication device (1) of claim 10,
**characterised in**
**that** the processing unit (6) is further adapted to adjust intensity levels of the electrical microphone signals and/or the electrical input communication signals to different intensity levels, mix the adjusted signals whereby the different intensity levels are determined by taking into consideration the determined relationship and the parameter values, and send the mixed signals as the electrical loudspeaker signals and as the electrical output communication signals.

12. The telecommunication device (1) of claim 1,
**characterised in**
**that** the processing unit (6) further comprises a recording unit adapted to record the electrical microphone signals and/or the electrical input communication signals audio data and send, on a request from the person (5), a requested part of the recorded audio data to the loudspeaker (44).

13. A method of providing an audio telecommunication between a person (5) and one or more other telecommunication devices (101, 102), whereby the audio telecommunication enables a simultaneous, bi-directional exchange of audio data between the person (5) and the other telecommunication devices (1, 101, 102) participating in the audio telecommunication, the method comprising the steps of:
receiving airborne sound reaching the person's ears (2) from an external sound source by a microphone (46) attached to a right or a left ear inset (4) at least partially inserted into an ear canal (20) of the respective right or left ear (2);
restricting a propagation of said airborne sound to ear drums (21) of the person's (5) ears (2);
converting, by the microphone (46), said airborne sound into electrical microphone signals and sending said electrical microphone signals to a processing unit (6);
receiving, by the processing unit (6), said electrical microphone signals; receiving, by the processing unit (6), electrical input communication signals as audio data from the one or more other telecommunication devices (101, 102);
adjusting, by the processing unit (6), the electrical microphone signals and the electrical input communication signals, and generating, by means of a respective combination of the adjusted signals, electrical loudspeaker signals, separately as right ear signals and left ear signals, and electrical output communication signals;
sending the electrical loudspeaker signals, separately as the right ear signals and the left ear signals, to a right and a left loudspeaker (44) attached to the right and the left ear inset (4), respectively, whereby sound generated by said loudspeakers (44) is in acoustic communication with the ear drum (21) of the respective ear (2);
converting, by the right and the left loudspeaker (44), the respective right ear and left ear signals of the electrical loudspeaker signals into sound which is received by the ear drum (21) of the respective ear (2); and
sending the electrical output communication signals to the one or more other telecommunication devices (101, 102).

14. The method of claim 13,
**characterised in**
**that** the method further comprises the steps of:
detecting an orientation of at least one of the ear insets (4) and provide an electrical orientation signal indicating the said detected orientation;
receiving, by the processing unit (6), the said electrical orientation signal; and
taking into consideration, by the processing unit (6), the received electrical orientation signal as a parameter controlling the aforementioned steps of adjusting the electrical microphone signals and the electrical input communication signals, and generating, by means of a respective combination of the adjusted signals, electrical loudspeaker signals, separately as right ear signals and left ear signals, and electrical output communication signals.

15. The method of one of the claims 13 and 14,
**characterised in**
**that** the method further comprises the steps of:
taking into consideration, by the processing unit (6), one or more parameters related to a perspicuity of the electrical loudspeaker signals and/or the electrical output communication signals as one or more parameters controlling the aforementioned steps of adjusting the electrical microphone signals and the electrical input communication signals, and generating, by means of a respective combination of the adjusted signals, electrical loudspeaker signals, separately as right ear signals and left ear signals, and electrical output communication signals.

## Amended claims

### Amended claims in accordance with Rule 137(2) EPC.

**1.** A telecommunication device (1) for an audio telecommunication between the telecommunication device (1) and one or more other telecommunication devices (101, 102), whereby the audio telecommunication enables a simultaneous, bi-directional exchange of audio data between the telecommunication devices (1, 101, 102) participating in the audio telecommunication, the telecommunication device (1) comprising
a) a right and a left ear inset (4) for a right and a left ear (2), respectively, of a person (5) using the telecommunication device (1), each ear inset (4) adapted to be at least partially inserted into the ear canal (20) of the respective ear (2) and comprising
a1) a blocking device (42) adapted to restrict a propagation of airborne sounds reaching the person's ear (2) from external sound sources to the ear drum (21) of the respective ear (2),
a2) a loudspeaker (44) in acoustic communication with the ear drum (21) of the respective ear (2) whereby the loudspeaker (44) is adapted to convert received electrical loudspeaker signals into sound,
b) a microphone (46) in acoustic communication with said airborne sounds whereby the microphone (46) is adapted to convert said airborne sounds, as said audio data, into electrical microphone signals,
c) a processing unit (6) adapted to receive the electrical microphone signals from the microphone (46), and electrical input communication signals from the one or more other telecommunication devices (101, 102), adjust the electrical microphone signals and the electrical input communication signals, generate the electrical loudspeaker signals, separately as right ear signals and a left ear signals, and electrical output communication signals by means of a respective combination of the adjusted signals, and send the electrical loudspeaker signals, separately as right ear signals and left ear signals, to the loudspeakers (44) of the right and the left ear inset (4) and the electrical output communication signals to the one or more other telecommunication devices (101, 102),
d) connection means (9) adapted to electrically couple the loudspeakers (44) of both ear insets (4), the microphone (46) and the processing unit (6), and
e) communication means (10) adapted to provide the processing unit (6) with a connection to the one or more other telecommunication devices (101, 102),
**characterised in**
**that** the telecommunication device (1) further comprises an orientation detector unit (8) adapted to detect an orientation of at least one of the ear insets (4), generate an electrical orientation signal indicating the said detected orientation, and send the said electrical orientation signal to the processing unit (6) whereby the orientation detector unit (8) is adapted to determine an orientation of one of the ear insets (4) with respect to the declination and the inclination of the geomagnetic field, and
**that** the processing unit (6) is further adapted to take into consideration the received electrical orientation signal as a control parameter when adjusting the electrical microphone signals and the electrical input communication signals, and generating, by means of a respective combination of the adjusted signals, electrical loudspeaker signals, separately as right ear signals and left ear signals, and electrical output communication signals.

**2.** The telecommunication device (1) of claim 1,
**characterised in**
**that** the processing unit (6) is further adapted to take into consideration one or more parameters related to a perspicuity of the electrical loudspeaker signals and/or the electrical output communication signals as control parameters when adjusting the electrical microphone signals and the electrical input communication signals, and generating, by means of a respective combination of the adjusted signals, electrical loudspeaker signals, separately as right ear signals and left ear signals, and electrical output communication signals, whereby the term "perspicuity" comprises the meaning of one or more of the following terms: understandability, perceivability, intelligibility, comprehensibility.

**3.** The telecommunication device (1) of claim 2,
**characterised in**
**that** the processing unit (6) is adapted to adjust a magnitude of the electrical microphone signals and the electrical input communication signals according to perspicuity-related control parameters and divide, by taking into account the electrical orientation signal, the adjusted signals to a right loudspeaker signal channel and a left loudspeaker signal channel so as to associate with each of the one or more other telecommunication devices (101, 102) and the airborne sound a specific spatial hearing impression for the person (5) using the telecommunication device (1).

**4.** The telecommunication device (1) of claim 1,
**characterised in**
**that** the orientation detector unit (8) comprises an attitude sensor connected to at least one of the ear insets (4) in a fixed position and adapted to generate electrical sensor signals indicative of an orientation of the attitude sensor.

**5.** The telecommunication device (1) of claim 4,
**characterised in**
**that** the orientation detector unit (8) is adapted to determine an orientation of at least one of the ear insets (4) by means of acceleration detection and relative position calculation.

**6.** The telecommunication device (1) of claim 1,
**characterised in**
**that** the telecommunication device (1) further comprises a communication management unit (22) adapted to control the audio telecommunication.

**7.** The telecommunication device (1) of claim 6,
**characterised in**
**that** the communication management unit (22) comprises an input device (25, 27) for input of communication-related control commands by the person (5) and an output device (25, 26) for output of communication-related information.

**8.** The telecommunication device (1) of claim 1,
**characterised in**
**that** the processing unit (6) is further adapted to determine, when receiving the electrical microphone signals and/or the electrical input communication signals, a relationship of the first telecommunication device (1) and/or of the one or more other telecommunication devices (101, 102) with respect to the participating telecommunication devices (1, 101, 102), process the received audio data and combine the processed audio data as the electrical loudspeaker signals and as the electrical output communication signals dependent on the determined relationship and on parameter values of one or more parameters related to perspicuity associated with one or more of the participating telecommunication devices (1, 101, 102), whereby the term "perspicuity" comprises the meaning of one or more of the following terms: understandability, perceivability, intelligibility, comprehensibility.

**9.** The telecommunication device (1) of claim 8,
**characterised in**
**that** the processing unit (6) is further adapted to adjust intensity levels of the electrical microphone signals and/or the electrical input communication signals to different intensity levels, mix the adjusted signals whereby the different intensity levels are determined by taking into consideration the determined relationship and the parameter values, and send the mixed signals as the electrical loudspeaker signals and as the electrical output communication signals.

**10.** The telecommunication device (1) of claim 1,
**characterised in**
**that** the processing unit (6) further comprises a recording unit adapted to record the electrical microphone signals and/or the electrical input communication signals audio data and send, on a request from the person (5), a requested part of the recorded audio data to the loudspeaker (44).

**11.** A method of providing an audio telecommunication between a person (5) and one or more other telecommunication devices (101, 102), whereby the audio telecommunication enables a simultaneous, bi-directional exchange of audio data between the person (5) and the other telecommunication devices (1, 101, 102) participating in the audio telecommunication, the method comprising the steps of:
receiving airborne sound reaching the person's ears (2) from an external sound source by a microphone (46) attached to a right or a left ear inset (4) at least partially inserted into an ear canal (20) of the respective right or left ear (2);
restricting a propagation of said airborne sound to ear drums (21) of the person's (5) ears (2);
converting, by the microphone (46), said airborne sound into electrical microphone signals and sending said electrical microphone signals to a processing unit (6);
receiving, by the processing unit (6), said electrical microphone signals;
receiving, by the processing unit (6), electrical input communication signals as audio data from the one or more other telecommunication devices (101, 102);
adjusting, by the processing unit (6), the electrical microphone signals and the electrical input communication signals, and generating, by means of a respective combination of the adjusted signals, electrical loudspeaker signals, separately as right ear signals and left ear signals, and electrical output communication signals;
sending the electrical loudspeaker signals, separately as the right ear signals and the left ear signals, to a right and a left loudspeaker (44) attached to the right and the left ear inset (4), respectively, whereby sound generated by said loudspeakers (44) is in acoustic communication with the ear drum (21) of the respective ear (2);
converting, by the right and the left loudspeaker (44), the respective right ear and left ear signals of the electrical loudspeaker signals into sound which is received by the ear drum (21) of the respective ear (2); and
sending the electrical output communication signals to the one or more other telecommunication devices (101, 102), **characterised in that** the method further comprises the steps of:
detecting an orientation of at least one of the ear insets (4) with respect to the declination and the inclination of the geomagnetic field and
provide an electrical orientation signal indicating the said detected orientation;
receiving, by the processing unit (6), the said electrical orientation signal; and
taking into consideration, by the processing unit (6), the received electrical orientation signal as a parameter controlling the aforementioned steps of adjusting the electrical microphone signals and the electrical input communication signals, and generating, by means of a respective combination of the adjusted signals, electrical loudspeaker signals, separately as right ear signals and left ear signals, and
electrical output communication signals.

**12.** The method of claim 11,
**characterised in**
**that** the method further comprises the steps of:
taking into consideration, by the processing unit (6), one or more parameters related to a perspicuity of the electrical loudspeaker signals and/or the electrical output communication signals as one or more parameters controlling the aforementioned steps of adjusting the electrical microphone signals and the electrical input communication signals, and generating, by means of a respective combination of the adjusted signals, electrical loudspeaker signals, separately as right ear signals and left ear signals, and electrical output communication signals, whereby the term "perspicuity" comprises the meaning of one or more of the following terms: understandability, perceivability, intelligibility, comprehensibility.
